**Europäisches Patentamt**

**European Patent Office**

**Office européen des brevets**

(19)

(11) Veröffentlichungsnummer: **0 135 834**
A2

# (12) EUROPÄISCHE PATENTANMELDUNG

(21) Anmeldenummer: **84110252.8**

(22) Anmeldetag: **29.08.84**

(51) Int. Cl.⁴: **C 08 F 297/08**

(30) Priorität: **03.09.83 DE 3331877**

(43) Veröffentlichungstag der Anmeldung: **03.04.85**
**Patentblatt 85/14**

(84) Benannte Vertragsstaaten: **BE DE FR GB IT NL**

(71) Anmelder: **HOECHST AKTIENGESELLSCHAFT,**
**Postfach 80 03 20, D-6230 Frankfurt am Main 80 (DE)**

(72) Erfinder: **Dorrer, Bernhard, Dr., Seebachstrasse 24,**
**D-6230 Frankfurt am Main 80 (DE)**
Erfinder: **Strametz, Helmut, Dr., Unterlindau 72,**
**D-6000 Frankfurt am Main (DE)**

(54) **Verfahren zur Herstellung einer Polypropylen-Formmasse.**

(57) Eine Polypropylen-Formmasse mit guter Härte und Kälteschlagzähigkeit entsteht durch zweistufige Polymerisation von Propylen und Ethylen in flüssigem Propylen in Gegenwart eines speziellen Trägerkatalysators.

EP 0 135 834 A2

Verfahren zur Herstellung einer Polypropylen-Formmasse

Die Erfindung betrifft ein vereinfachtes, kostengünstiges Verfahren zur Herstellung einer thermoplastischen Formmasse aus einem Propylen-Blockcopolymeren mit einem ausgewogenen Verhältnis von Härte und Schlagzähigkeit über einen breiten Temperaturbereich und mit niedrigen Katalysatorrestgehalten in flüssigem Propylen mit hochaktiven und hoch stereospezifischen Katalysatoren auf Magnesiumhalogenid-Basis.

Isotaktisches Polypropylen kann zu Formkörpern verarbeitet werden, die vorteilhafte mechanische Eigenschaften aufweisen, vor allem hohe Härte, Steifigkeit sowie Formbeständigkeit auch bei höheren Temperaturen. Für viele Anwendungen wirkt sich auch die gute Spannungsrißbeständigkeit günstig aus. Nachteilig ist dagegen die hohe, oberhalb von 0°C liegende Einfriertemperatur des Polypropylens. Sie bewirkt ein starkes Absinken von Schlagfestigkeit, Reiß- und Biegefestigkeit der aus isotaktischem Polypropylen hergestellten Gegenstände mit sinkender Temperatur. Diesem Nachteil versucht man durch Zusatz von Komponenten mit möglichst tiefer Einfriertemperatur zu begegnen, wobei vor allem Ethylen-Propylen-Copolymere oder Polyethylen sowie Kombinationen davon dem Polypropylen zugesetzt werden. Derartige Mischungen lassen sich herstellen durch Zusammenbringen der Einzelbestandteile in Walzwerken, Knetern oder Extrudern. Sie entstehen aber auch bei verschiedenen Methoden der Blockcopolymerisation mit Ziegler-Natta-Katalysatoren. Diese Verfahren der Blockcopolymerisation sind besonders vorteilhaft, weil die Polymermischung mit verbesserter Schlagfestigkeit und Zähigkeit in Pulverform anfällt und das Granulieren vor ihrer Weiterverarbeitung unter Umständen vermieden werden kann.

Die Blockcopolymerisationen werden meist derart durchgeführt, daß zunächst in Gegenwart des Katalysators ein reines isotaktisches, kristallines Polypropylen oder ein sehr wenig Comonomer enthaltendes, überwiegend kristallines Propylencopolymer hergestellt wird und sodann in einem weiteren Abschnitt die Copolymerisation zur Herstellung eines amorphen Ethylen-Propylen-Copolymeren durchgeführt wird. Bisweilen wird statt eines amorphen Ethylen-Propylen-Copolymeren ein reines Polyethylen erzeugt oder der Verfahrensstufe der Herstellung des amorphen Ethylen-Propylen-Copolymeren werden weitere Stufen angefügt, in denen Ethylen-Propylen-Copolymere anderer Zusammensetzung oder reines Polyethylen erzeugt werden.

Für die Herstellung der Blockcopolymeren werden die bekannten Ziegler-Natta-Katalysatoren benutzt, die Propylen mit hoher Ausbeute zu weitgehend isotaktischem, kristallinem Polypropylen umsetzen können. Sie bestehen in den meisten Fällen aus einer Kombination einer reduzierten Titanverbindung mit einer aluminiumorganischen Verbindung als Cokatalysator. Neuerdings werden jedoch vielfach Verbindungen oder Kombinationen aus Magnesiumhalogenid, Titanverbindung und weiteren Verbindungen mit Elektronendonor-Charakter bevorzugt. Als Cokatalysator kommt dann ein Gemisch aus aluminiumorganischer Verbindung und Elektronendonor zum Einsatz. Diese Katalysatorsysteme zeigen wesentliche Vorteile hinsichtlich ihrer Aktivität. Sie können ebenfalls zur Herstellung von schlagzähen Blockcopolymeren eingesetzt werden.

Es wurde bereits die - vorwiegend diskontinuierliche - Herstellung von Blockcopolymeren in flüssigem Propylen unter Einsatz eines speziellen Katalysatorsystems beschrieben (vgl. japanische Anmeldung Sho-54-39487). Die erreichten Kontaktausbeuten genügen allerdings nicht, um ausreichend niedrige Katalysatorrestgehalte im Produkt erreichen zu können. Dadurch werden Stabilität, Farbe und Geruch des Polymeren beeinträchtigt; der hohe Chlorgehalt erfordert außerdem die reichliche Zugabe von Säure bindenden Zusatzstoffen, um Korrosionen an Verarbeitungsmaschinen zu

verhindern. Weiterhin ist ein Polymerisationsverfahren bekannt, bei welchem eine kontinuierliche Arbeitsweise in der ersten Stufe mit einer absatzweisen in der Stufe zur Herstellung des amorphen Ethylen-Propylen-Copolymeren verbunden ist (vgl. deutsche Offenlegungsschrift 32 08 010), wobei der Katalysator zwischenzeitlich durch Zugabe von Elektronendonorverbindungen desaktiviert wird. Allerdings muß in den nachfolgenden Polymerisationsstufen die Aktivität des Katalysators durch Zuspeisen großer Mengen an Aktivator wieder auf das ursprüngliche Niveau angehoben werden. Während des Füllens und Entleerens der Reaktionsgefäße der zweiten Stufe treten stark schwankende Polymerisationsbedingungen auf, die vor allem bei hochaktiven Katalysatoren technisch nur schwer zu beherrschen sind. Denn trotz zwischenzeitlicher Katalysatordesaktivierung ist das Ablaufen unerwünschter Reaktionen nicht ganz zu vermeiden, da der Katalysator mit dem Desaktivierungsmittel nur einen intermediären Komplex im Sinne einer reversiblen Gleichgewichtsreaktion bilden darf; damit bleibt aber bei wirtschaftlich tragbaren Konzentrationen des Desaktivierungsmittels ein Teil des Katalysators immer noch aktiv.

Schließlich ist ein Verfahren beschrieben worden, welches sich unter anderem durch geringe Ethylenkonzentrationen bei der Herstellung des Ethylen-Propylen-Copolymeren in der zweiten Stufe auszeichnet (vgl. deutsche Offenlegungsschrift 31 40 664). Diese Polymerisationen bei niedrigen Ethylenkonzentrationen führen jedoch zu Produkten mit sehr niedriger Schlagzähigkeit bei niedrigen Temperaturen. Außerdem entstehen bei den geforderten Verfahrensbedingungen Produkte mit einem hohen Anteil an Ethylen-Propylen-Copolymer, die wegen der Klebrigkeit des Copolymeren schwierig aufzuarbeiten sind. Derartige Polymere besitzen extrem niedrige Härtewerte und bei tiefen Temperaturen einen fast vollständigen Abfall der Zähigkeit, wodurch ihr Gebrauchsnutzen erheblich eingeschränkt wird.

Es wurde nun gefunden, daß die Herstellung von Propylen-Blockcopolymeren in einem Verfahren mit hochaktiven und hochstereospezifischen Katalysatoren möglich ist, welches gegenüber den bekannten Verfahren wesentlich vereinfacht ist, deren Nachteile vermeidet und gleichzeitig Produkte liefert, die eine ausgewogene und ausreichend hohe Härte und Schlagzähigkeit über den gesamten Temperaturbereich von Raumtemperatur bis zu tiefen Temperaturen sowie die erwünschten niedrigen Gehalte an Katalysatorresten aufweisen.

Gegenstand der Erfindung ist ein Verfahren zur Herstellung einer Polypropylen-Formmasse bestehend aus 65 bis 95 Gew.-% eines Polypropylens und 35 bis 5 Gew.-% eines Ethylen-Propylen-Copolymers durch kontinuierliche Polymerisation in zwei Stufen im flüssigen Propylen, das dadurch gekennzeichnet ist, daß man in der ersten Stufe bei einer Verweilzeit von 30 bis 180 Minuten ein kristallines Polypropylen oder durch geringe Mengen eines anderen 1-Olefins modifiziertes Polypropylen und in der zweiten Stufe bei einer Verweilzeit von 10 bis 90 Minuten in Gegenwart von 6 bis 60 Mol % Ethylen, bezogen auf das anwesende Ethylen-Propylen-Gemisch, ein Ethylen-Propylen-Copolymer herstellt, wobei man in beiden Stufen einen Mischkatalysator verwendet, welcher durch Inberührungbringen

(A) des Reaktionsproduktes aus

   (a1) einem Umsetzungsprodukt eines Magnesiumhalogenids mit einem Elektronendonor und/oder einem Cyclopolyen und

   (a21) einer durch Reduktion von Titantetrachlorid mittels einer metallorganischen Verbindung der I. bis III. Hauptgruppe des Periodensystems entstehenden Verbindung oder

   (a22) Titantetrachlorid mit

(B) einer halogenfreien aluminiumorganischen Verbindung und

(C) einer Verbindung aus der Gruppe der Cyclopolyene und der aromatischen Carbonsäureester entstanden ist.

Für die Herstellung der Komponente A wird ein Magnesiumhalogenid wie Magnesiumchlorid oder Magnesiumbromid, vorzugsweise Magnesiumchlorid, eingesetzt.

Das Reaktionsprodukt a1 des Magnesiumhalogenids mit dem Elektronendonor und/oder dem Cyclopolyen wird in an sich bekannter Weise in Anwesenheit oder Abwesenheit eines inerten Lösungsmittels bei einer Temperatur von -20°C bis 100°C hergestellt, beispielsweise durch Erhitzen des Magnesiumhalogenids in einer Lösung des Reaktionspartners, Suspendieren des Mg-Halogenids im flüssigen Reaktionspartner oder gemeinsames Mahlen beider Komponenten. Vorzugsweise wird in Abwesenheit eines Lösungsmittels gearbeitet, z.B. durch Mahlen des Magnesiumhalogenids mit der reinen Elektronendonorverbindung und/oder dem Cyclopolyen. Das Mahlen wird dabei vorzugsweise in einer Vibrationsmühle durchgeführt. Die Mahldauer beträgt 1 - 120 Stunden oder auch länger, vorzugsweise 30 bis 100 Stunden. Es können aber auch andere Zerkleinerungsmethoden angewendet werden, bei denen genügend große Scherkräfte auf das Mahlgut ausgeübt werden.

Das Molverhältnis des eingesetzten Magnesiumhalogenids zur Elektronendonorverbindung und/oder Cyclopolyen beträgt mehr als 2 : 1. Bevorzugt wird ein Molverhältnis von 3 bis 15 : 1, besonders bevorzugt wird ein Molverhältnis von 4,5 bis 8 : 1.

Als Elektronendonorverbindungen werden Ether, Amide, Amine, Ester, Ketone oder Nitrile eingesetzt. Die verwendeten Elektronendonorverbindungen sollen jedoch keinen an Sauerstoff oder Stickstoff gebundenen Wasserstoff enthalten.

Geeignete Elektronendonorverbindungen sind beispielsweise Ester aromatischer Carbonsäuren, Cyclopolyene, Diethylether, Dioxan, Anisol, Dimethylacetamid, Tetramethylethylendiamin, Essigsäureethylester, Aceton, Acetophenon, Acetonitril oder Benzonitril.

Bevorzugt werden als Elektronendonorverbindungen Ester von aromatischen Carbonsäuren wie Benzoesäureethylester, Benzoesäuremethylester, p-Toluylsäureethylester, p-Toluylsäuremethylester, Anissäureethylester oder Anissäuremethylester oder Cyclopolyene wie beispielsweise Cycloheptatrien -(1,3,5) oder Cyclooctatetraen verwendet.

Das Umsetzungsprodukt a21, das durch Reduktion von Titantetrachlorid mit einer metallorganischen Verbindung der Elemente der I. bis III. Hauptgruppe des Periodensystems hergestellt wird, ist kein reines Titantrichlorid, sondern enthält in unbekannter Weise gebundene metallorganische Verbindungen.

Als Reduktionsmittel wird vorzugsweise eine aluminiumorganische Verbindung der Formel $AlR_{3-n}X_n$, wobei R ein Alkylrest mit 1 - 6 Kohlenstoffatomen und X R oder Halogen bedeuten und n = 0 bis 2 ist, eingesetzt. Beispiele von derartigen Verbindungen sind Aluminiumdiethylchlorid, -dipropylchlorid, -diisopropylchlorid, -diisobutylchlorid, vorzugsweise Aluminiumdiethylchlorid, oder Aluminiumalkylsesquichloride, welche äquimolekulare Gemische von Aluminiumdialkylchlorid und Aluminiumalkyldichlorid sind, vorzugsweise Aluminiumethylsesquichlorid, oder Aluminiumtrialkyle, wie Aluminiumtrimethyl, -triethyl, -tripropyl, -triisobutyl, -tridiisobutyl, vorzugsweise Aluminiumtriethyl und Aluminiumtriisobutyl, aber auch die Umsetzungsprodukte von Aluminiumtrialkylen oder Aluminiumdialkylhydriden, die Alkylreste mit 1 - 6 Kohlenstoffatomen enthalten, mit 4 - 8 Kohlenstoffatomen enthaltenden Dienen. Ein Beispiel für die letztgenannten Verbindungen ist das Umsetzungsprodukt von Aluminiumtriisobutyl                               oder Aluminiumdiisobutylhydrid mit Isopren, das im Handel unter dem Namen Aluminiumisoprenyl erhältlich ist.

Die Reduktion erfolgt in einem inerten gesättigten flüssigen aliphatischen Kohlenwasserstoff, wie Butan, Pentan, Hexan, Octan, Cyclohexan oder einem Kohlenwasserstoffgemisch, wie beispielsweise einer Benzinfraktion mit einem Siedebereich von 130° bis 160°C, oder in einem flüssigen aromatischen Kohlenwasserstoff wie Benzol, Toluol, Xylole. Vorzugsweise wird Hexan, die vorgenannte Benzinfraktion oder Toluol verwendet.

Bei der Umsetzung von Titantetrachlorid mit der aluminiumorganischen Verbindung kann so verfahren werden, daß das Titantetrachlorid, gegebenenfalls in einem inerten Kohlenwasserstoff gelöst, zu einer Lösung der aluminiumorganischen Verbindung gegeben wird, oder auch umgekehrt. Es ist aber auch möglich, beide Komponenten gleichzeitig in ein inertes Reaktionsmedium einzuführen. Vorzugsweise wird die aluminiumorganische Verbindung zum Titantetrachlorid gegeben.

Das Molverhältnis von Titantetrachlorid zu aluminiumorganischer Verbindung bei der Reduktion kann in dem Bereich von 1 : 0,2 bis 1 : 1,5 variiert werden, vorzugsweise wird bei einem Molverhältnis von 1 : 0,33 bis 1 : 1,1 gearbeitet.

Die Reduktion von $TiCl_4$ durch die aluminiumorganische Verbindung kann auch in Anwesenheit eines Ethers vorgenommen werden; vorzugsweise wird der Ether mit dem Titantetrachlorid gemischt und dann die aluminiumorganische Verbindung hinzugefügt. Es werden Ether der Formel $R^1 - O - R^2$ eingesetzt, wobei $R^1$ und $R^2$ gleich oder verschieden sein können und einen Alkylrest mit 2 - 18 Kohlenstoffatomen bedeuten. Beispiele sind Diethylether, Di-n-propylether, Di-n-butylether, Ethyl-n-butylether, Di-isoamylether, Dioctylether, Di-dodecylether, vorzugsweise wird der Di-n-butylether und der Diisoamylether eingesetzt. Das Molverhältnis Titantetrachlorid zu Ether beträgt 1 : 0,3 bis 1 : 1,5, vorzugsweise 1 : 0,9 bis 1 : 1,1.

Bei der Reduktion des Titantetrachlorids mit der aluminiumorganischen Verbindung arbeitet man bei einer Temperatur von -50°C bis +80°C, vorzugsweise bei -20°C bis +25°C.

Zur Vervollständigung der Reduktion kann das Reaktionsprodukt einer thermischen Behandlung bei einer Temperatur von 40 bis 150°C unterworfen werden; die thermische Behandlung kann in einer, aber auch in 2 Stufen erfolgen, beispielsweise in der ersten Stufe bei 60°C bis 95°C, in der 2. Stufe bei einer Temperatur höher als 100°C.

Bei der Umsetzung von Titantetrachlorid mit der aluminiumorganischen Verbindung, gegebenenfalls in Gegenwart von Ethern, entstehen in dem Reaktionsmedium lösliche und unlösliche Reaktionsprodukte. Das unlösliche Reaktionsprodukt kann isoliert werden und durch Waschen mit dem bei der Reduktion verwendeten Lösungsmittel von den löslichen Reaktionsprodukten befreit werden.

Sodann wird das Reaktionsprodukt a1 Magnesiumdihalogenid-Elektronendonor und/oder -Cyclopolyen mit dem Umsetzungsprodukt a21 von Titantetrachlorid mit einer metallorganischen Verbindung oder dem Titantetrachlorid a22 in Berührung gebracht. Dabei kann die Komponente a21 entweder als reiner vom Reaktionsmedium abgetrennter Feststoff oder zusammen mit den anderen Reaktionsprodukten aus der Reduktionsreaktion eingesetzt werden. Möglich ist aber auch die Verwendung nur der löslichen Reaktionsprodukte.
Das Inberührungbringen erfolgt vorzugsweise in einem inerten Kohlenwasserstoffmedium, wobei vorteilhafterweise das Umsetzungsprodukt a21 aus Titantetrachlorid und der metallorganischen Verbindung bzw. das Titantetrachlorid vorgelegt wird und das Reaktionsprodukt a1 suspendiert in einem inerten Kohlenwasserstoff, zugegeben wird. Es ist auch möglich, die Reaktionspartner gleichzeitig zusammenzuführen. Besonders bevorzugt ist, die titanhaltige Komponente zuzugeben. Das Inberührungbringen erfolgt im Temperaturbereich von -50°C bis 150°C, vorzugsweise 20°C bis 100°C.

Im Falle der reduzierten Übergangsmetallverbindung a21 ist die Menge der eingesetzten Reaktanten a1 und a21 für die Aktivität der Katalysatoren und den Asche- und Halogengehalt der Polymerisate von entscheidender Bedeutung. Die eingesetzte Menge Titantrichlorid soll größer als 30 Gew.-%, vorzugsweise 40 bis 200 Gew.-%, insbesondere 50 bis 140 Gew.-%, bezogen auf das Reaktionsprodukt 1a, betragen.

Bei dem mit Titantetrachlorid (a22) umgesetzten Magnesiumhalogenid-Elektronendonor- bzw. Cyclopolyen-Komplex a1 liegt das Verhältnis Mg/Ti vorzugsweise im Bereich von 3 bis 40 : 1, besonders vorteilhaft im Bereich von 10 bis 30 : 1. Falls die Komponente A durch Inberührungbringen der Komponente a1 mit Titantetrachlorid hergestellt wurde, erfolgt nun ein Auswaschen des überschüssigen nicht gebundenen Titantetrachlorids mit einem der schon genannten Kohlenwasserstoffe.

Das Inberührungbringen der Komponenten a1 und a21 bzw. a22 zur Herstellung der titanchloridhaltigen Mischkatalysatorkomponente A kann auch durch Trockenmahlen oder Mahlen in einem Kohlenwasserstoff erfolgen.
Das Inberührungbringen erfolgt über einen Zeitraum von 10 min bis 600 min, vorzugsweise 60 bis 300 min.

Bevorzugt verwendet wird eine Katalysatorkomponente A, welche aus den Komponenten a1 und a21 entstanden ist.

Als halogenfreie aluminiumorganische Verbindung (Komponente B) eignen sich vor allem verzweigte, unsubstituierte Aluminiumalkyle der Formel $AlR^3$, wobei $R^3$ einen Alkylrest mit 1 - 10 Kohlenstoffatomen bedeutet, wie z.B. Aluminiumtrimethyl, Aluminiumtriethyl, Aluminiumtriisobutyl, Aluminiumtridiisobutyl. Weiterhin geeignet sind die Reaktionsprodukte aus Aluminiumtriisobutyl bzw. Aluminiumdiisobutylhydrid und Isopren, die unter dem Namen Aluminiumisoprenyl im Handel sind. Besonders geeignet sind Aluminiumtriethyl und Aluminiumtriisobutyl.

Die Mischkatalysatorkomponente C besteht aus einem Stereoregulator, der ausgewählt wird aus der Gruppe der Cyclopolyene und/oder der aromatischen Carbonsäureester. Unter den Cyclopolyenen sind hervorzuheben Cycloheptatrien-(1,3,5), Cyclooctatetraen, von den aromatischen·Carbonsäureestern werden bevorzugt verwendet Methylbenzoat, Ethylbenzoat, p-Toluylsäureethylester, p-Toluylsäuremethylester, Anissäureethylester und Anissäuremethylester. Die Verbindungen können allein oder in Mischung eingesetzt werden, beispielsweise Cycloheptatrien-(1,3,5) und aromatische Carbonsäureester.

Die Menge an Katalysatorkomponente C richtet sich nach der Menge an Katalysatorkomponente B. Das Molverhältnis Komponente B zu Komponente C soll größer als 1 : 1, vorzugsweise 1,5 : 1 bis 15 : 1 sein.

Die Katalysatorkonzentration im flüssigen Propylen wird so gewählt, wie für eine Propylen-Homopolymerisation üblich. Die Konzentration der Komponente A beträgt daher 0,001 bis 1 Mol/l, bezogen auf Titan, vorzugsweise 0,01 bis 0,1 Mol/l. Die Komponente B wird in einer Konzentration von 0,01 bis 40 Mol/l, vorzugsweise 0,1 bis 4 Mol/l und die Komponente C in einer Konzentration von 0,003 bis 12 Mol/l, vorzugsweise 0,03 bis 1,2 Mol/l eingesetzt.

Das erfindungsgemäße Verfahren wird in zwei Stufen durchgeführt, wobei in der ersten Stufe ein hochkristallines Polypropylen oder mit einer geringen Menge eines anderen 1-Olefins als Comonomer modifiziertes Polypropylen und in der zweiten Stufe ein Ethylen-Propylen-Copolymer hergestellt wird.

Die Durchführung der Polymerisation in der ersten Reaktionsstufe geschieht in der Weise, daß flüssiges Propylen, eine Suspension des festen Katalysatoranteils in einem inerten Suspensionsmittel sowie die weiteren flüssigen Katalysatorbestandteile fortlaufend in ein geeignetes Reaktionsgefäß eingepumpt werden. Dieses Reaktionsgefäß kann ein Autoklav, ein üblicher Reaktionskessel oder ein Rohrreaktor in Schleifenform sein, wobei wie üblich durch eingebaute Rührer oder Umwälzpumpen für eine ausreichende Durchmischung gesorgt wird. Statt eines einzelnen Reaktionsgefäßes können auch zwei oder mehr Reaktionsgefäße verwendet werden, die durch Rohrleitungen miteinander verbunden sind. Die Ausgangsprodukte werden dann in das erste Gefäß eingespeist. Die Abführung der Reaktionswärme erfolgt durch Mantelkühlung, durch in die Gefäße eingebaute Innenkühler oder auch durch Siedekühlung.

Das flüssige Propylen selbst, das sowohl als Monomer wie auch als Suspensionsmittel dient, kann wechselnde Mengen an inerten, niedrigsiedenden, gelösten Bestandteilen enthalten, wie z.B. Propan oder Stickstoff, die aber auf die bei diesem Verfahren entstehenden Produkte keinen Einfluß haben.

In der ersten Reaktionsstufe wird eine Reaktionstemperatur von 40 bis 85°C, bevorzugt eine solche von 50 bis 75°C eingehalten.

Die Einstellung des gewünschten Molekulargewichtes des Blockcopolymeren erfolgt durch Zugabe von Wasserstoff zum flüssigen Propylen. Die zugegebene Menge wird derart eingestellt, daß das in der ersten Reaktionsstufe entstehende Produkt einen Schmelzindex MFI 230/5 von 0,05 bis 100 dg/min aufweist.

Die Menge des in der ersten Stufe hergestellten Polymeren beträgt, bezogen auf das ganze bei dem Verfahren entstehende feste Polymer, 65 bis 95 Gew.-%, vorzugsweise 70 bis 90 Gew.% und insbesondere 75 bis 85 Gew.-%.

Falls in der ersten Stufe ein mit geringen Mengen eines anderen 1-Olefins als Comonomer modifiziertes Polypropylen hergestellt werden soll, so wird das Comonomere wie die anderen Ausgangsprodukte fortlaufend dosiert. Als andere 1-Olefine kommen einfach ungesättigte Kohlenwasserstoffe mit 2 bis 10 Kohlenstoffatomen in Frage, vorzugsweise Ethylen und Buten, insbesondere Ethylen. Es können auch Mischungen der besagten 1-Olefine eingesetzt werden. Die Konzentrationen betragen, bezogen auf eingespeistes flüssiges Propylen, 0 bis 1 Mol-%. Sofern Ethylen verwendet wird, kann der Ethylengehalt des flüssigen Propylens auch durch Rückführung einer Teilmenge des Ethylen-Propylen-Gemisches, das nach der Durchführung des Verfahrens anfällt, eingestellt werden.

Die in der ersten Stufe entstandene Polymersuspension, die im wesentlichen das überwiegend kristalline, isotaktische Polypropylen, das gegebenenfalls mit geringen Mengen eines 1-Olefins modifiziert ist, die aktiven Katalysatorbestandteile, flüssiges Propylen, geringe Mengen an Wasserstoff sowie gegebenenfalls inerte Anteile enthält, wird nunmehr in die zweite Reaktionsstufe überführt, wobei die beiden Stufen unmittelbar miteinander verbunden sind. Die unmittelbare Verbindung zwischen der ersten und zweiten Stufe kann im einzelnen z.B. dadurch geschehen, daß die betreffenden Reaktionsgefäße durch eine offene Rohrleitung miteinander verbunden sind, durch die die Suspension in einem kontinuierlichen Strom in die zweite Stufe fließt. Hierzu ist es nötig, daß in der ersten Stufe ein geringfügig höherer Druck herrscht als in der zweiten Stufe, was beispielsweise durch eine Drucküberlagerung mit einem Inertgas in dem Reaktionsgefäß (bzw. den Reaktionsgefäßen) der ersten Stufe geschehen kann. Es ist aber auch möglich, die Reaktionsgefäße der ersten Stufe flüssigkeitserfüllt zu halten und den nötigen Überdruck dadurch herzustellen, daß das flüssige Propylen durch eine entsprechend ausgelegte Druckpumpe in die erste Stufe eingedrückt wird. Sind die Mengen an Suspension, die von der ersten in die zweite Stufe überführt werden müssen, sehr klein, wie das im allgemeinen im Versuchsmaßstab der Fall ist, so kann es notwendig werden, in die betreffende Rohrleitung ein Ventil einzubauen, das über eine geeignete Steuerung in regelmäßigen Zeitabständen geöffnet und geschlossen wird. Die Zeitabstände werden so gewählt, daß die Pausen, in denen das Ventil geschlossen ist, im Bereich von Sekunden oder einigen Minuten liegen. Die Zeiten, in denen das Ventil geöffnet ist, sind im allgemeinen kürzer als diejenigen, in denen es geschlossen ist. Auf diese Weise können kleine Mengen Suspension überströmen, ohne daß Verstopfungen oder Rückvermischungen auftreten und ohne daß die kontinuierliche Charakteristik des Herstellverfahrens gestört wird, da die Taktzeiten der Ventilsteuerung sehr klein gegenüber der mittleren Verweilzeit in den Reaktionsgefäßen sind.

Die Suspension kann von der ersten in die zweite Stufe aber auch von einer Pumpe gefördert werden. Hierbei muß der Druck in der ersten Stufe nicht unbedingt über demjenigen in der zweiten Stufe liegen.
Der Reaktionsraum der zweiten Stufe ist, was die eingesetzten Gefäße und deren Größe betrifft, im wesentlichen ähnlich ausgelegt wie derjenige der ersten Stufe. Insbesondere werden gleichartige Reaktionsgefäße, gegebenenfalls zu mehreren, verwendet. Auf diese Weise kann das Reaktionsvolumen in der zweiten Stufe in Zeiten, in denen kein Blockcopolymer hergestellt wird, für die Polymerisation von normalem, isotaktischem Polypropylen benützt werden, wodurch eine bedeutende Steigerung des Durchsatzes der Polymerisationsanlage zu erzielen ist.

In der zweiten Stufe wird eine ausreichend hohe Konzentration des Ethylens im flüssigen Propylen aufrechterhalten. Sie beträgt 6 bis 60 Mol%, vorzugsweise 10 bis 55 Mol% und insbesondere 15 bis 50 Mol%, jeweils bezogen auf das Ethylen-Propylen-Gemisch. Die Einstellung der Ethylenkonzentration erfolgt durch Einspeisen von Ethylen in das Reaktionsgefäß oder die Reaktionsgefäße der zweiten Stufe. Es kann aber auch ein Ethylen-Propylen-Gemisch eingespeist werden, wie es nach Durchführung des Verfahrens und Abtrennung von den anderen Ausgangs- und Reaktionsprodukten anfällt.

Die Temperaturen in der zweiten Polymerisationsstufe betragen 40 bis 85°C, vorzugsweise 50 bis 70°C und insbesondere 60°C.

Der Druck in der zweiten Stufe beträgt 23 bis 64 bar, vorzugsweise 31 bis 50 bar.

Die Verweilzeiten in den einzelnen Reaktionsstufen werden so eingestellt, daß sie in der ersten Stufe 30 bis 180 Minuten, vorzugsweise 40 bis 90 Minuten und in der zweiten Stufe 10 bis 90 Minuten, vorzugsweise 15 bis 70 Minuten betragen.

Es ist auch möglich, in die zweite Stufe zusätzlich Aktivator und gegebenenfalls Stereoregulator einzuleiten. Dies ist vor allem dann vorteilhaft, wenn die Polymerisation in der ersten Stufe bei einem niedrigen Molverhältnis von Aktivator zu Titanverbindung beziehungsweise bei niedriger Aktivatorkonzentration durchgeführt wird.

Falls erforderlich, wird in die zweite Stufe noch zusätzlicher Wasserstoff zur geeigneten Regelung des Molekulargewichts des dort hergestellten Polymeren eingespeist.

Unmittelbar nach Durchführung der Polymerisation in der zweiten Stufe wird das entstandene Polymere vom Suspensionsmittel und den sonstigen löslichen Reaktionsprodukten abgetrennt. Dies kann durch einen Filtrations-, Dekantationsoder Zentrifugierschritt in dazu geeigneten, druckfesten Aggregaten geschehen, z.B. in Druckfiltern, Sedimentationstürmen, Zentrifugen oder Dekantern. Um die Entfernung der löslichen Reaktionsprodukte zu vervollständigen, kann der Abtrennung eine Wäsche vorangestellt werden, in der die Suspension beispielsweise einer Gegenstromwäsche mit frischem flüssigem Propylen unterzogen wird. Wäsche und Abtrennung können auch in einem einzigen Aggregat durchgeführt werden, welches beide Aufgaben erfüllt, wie z.B. ein Wasch- und Sedimentationsturm nach dem Gegenstromprinzip. Am unteren Ende des Turms wird dann eine stark eingedickte Suspension des Polymerpulvers in weitgehend reinem Suspensionsmittel abgezogen.

Infolge der sehr hohen Aktivität des erfindungsgemäß eingesetzten Katalysators und der Verfahrensauslegung ist es im allgemeinen nicht notwendig, eine Entfernung der Katalysatorreste vorzusehen. Falls jedoch ein außergewöhnlich niedriger Gehalt an Katalysatorresten gewünscht werden sollte, so kann zwischen der zweiten Polymerisationsstufe und der Abtrennung noch ein Gefäß geschaltet werden, in welchem bei einer Temperatur von 50 bis 80°C, vorzugsweise 60 bis 70°C durch Zusetzen von wasserstoffaciden Verbindungen, die die aluminiumorganischen Verbindungen zersetzen und gleichzeitig komplexbildend auf das im Polymerpulver enthaltene Magnesiumhalogenid wirken, eine verbesserte Abtrennung der Katalysatorreste bewirkt werden. Als derartige Verbindungen eignen sich beispielsweise höhere aliphatische Carbonsäuren, wie die 2-Ethylhexansäure.

Das nach dem Abtrennen der flüssigen Bestandteile gewonnene, propylenfeuchte Polymerpulver wird nunmehr vollständig getrocknet.

Das erfindungsgemäße, kontinuierlich durchgeführte Verfahren ermöglicht durch die Verwendung von flüssigem Propylen als Suspensionsmittel bei gleichzeitigem Einsatz der erfindungsgemäßen Katalysatoren die Herstellung von Blockcopolymeren mit großer Ausbeute und hoher Isotaktizität, wodurch sich einerseits mannigfaltige Einsparungen bei Apparaten und Verfahrensschritten und andererseits niedrige Katalysatorrestgehalte, niedrige Gehalte an amorphem ataktischem Polypropylen im Produkt und geringer Anfall an wachsartigen Nebenprodukten ergeben. Die Reaktionsbedingungen in der zweiten Stufe werden so geführt, daß hochwertige Ethylen-Propylen-Copolymere entstehen, die den Blockcopolymeren die besagten günstigen Schlagzähigkeitseigenschaften
verleihen.

Das nach dem erfindungsgemäßen Verfahren hergestellte Blockcopolymer weist eine ausgewogene Relation zwischen Härte und
Schlagzähigkeit über einen breiten Temperaturbereich von
Raumtemperatur bis -40°C auf und besitzt niedrige Katalysatorrestgehalte.

Ferner weist das Blockcopolymer einen Schmelzindex MFI 230/5
von 0,05 bis 100 dg/min auf und enthält 1 bis 40 Gew.-%,
vorzugsweise 4 bis 35 Gew.-%, insbesondere 7 bis 24 Gew.-%
Ethylen. Seine Härte liegt im allgemeinen zwischen 30 und
80 N/mm², vorzugsweise zwischen 40 und 70 N/mm² und seine
Kerbschlagzähigkeit bei 23°C im allgemeinen über 10, vorzugsweise über 25 mJ/mm², bei 0°C im allgemeinen über 5, vorzugsweise über 15 mJ/mm² und bei -40°C im allgemeinen über 3, vorzugsweise über 5 mJ/mm².

Für die Weiterverarbeitung wird das erfindungsgemäß gewonnene Blockcopolymer mit den üblichen Zusätzen (Stabilisatoren, Gleitmittel, Füllstoffe, Pigmente etc.) versehen. Es
kann entweder in Extrudern oder Knetern in Granulatform überführt oder aber auch aufgrund seiner guten Homogenisierbarkeit ohne vorausgegangene Behandlung in einem Extruder oder
Kneter direkt in Pulverform für die Herstellung von Kunststoff-Artikeln verwendet werden. Da seine Schmelzviskosität
über den gesamten Bereich variiert werden kann, der für die
bekannten Verarbeitungsmethoden benötigt wird, kann es nach
allen diesen Methoden verarbeitet werden. Die dabei hergestellten Artikel besitzen hohe Härte, Steifigkeit und
Elastizität, eine gute Schlagfestigkeit und Beständigkeit
gegen Weißbruch bis zu

Temperaturen von -40°C und zeichnen sich durch ein gutes
Aussehen aus, da so gut wie keine Stippen, Schlieren und
Fließmarkierungen auftreten.

Die Bestimmung der Eigenschaften der gemäß den nachfolgenden Beispielen hergestellten Polymeren wurde im einzelnen nach folgenden Methoden durchgeführt:

Der Schmelzindex MFI 230/5 wurde nach DIN 53 735 gemessen und in dg/min angegeben.

Die Messung der Kugeldruckhärten erfolgte nach DIN 53 456 an gepreßten Platten, die 3 h bei 140°C unter $N_2$ getempert, im Laufe von 3 h abgekühlt und zum Temperaturausgleich 24 h bei 23°C und 50 % rel. Luftfeuchte in einer Klimakammer gelagert worden waren.

Zur Bestimmung der mechanischen Eigenschaften bei Raumtemperatur und tiefen Temperaturen wurde die Kerbschlagzähigkeit bei 23°C, 0°C und -40°C in Annäherung an DIN 53 453 am Normkleinstab mit V-Kerbe gemessen. Die Probekörper wurden gepreßten Platten entnommen, die nach Herstellung 24 h bei 23°C und 50 % rel. Luftfeuchte gelagert worden waren.

Die Bestimmung des Ethylengehaltes erfolgte an 100 µm dicken, bei 180°C gepreßten Folien, wobei die Absorptionsbanden bei einer Wellenlänge von 13,65 und 13,9 µm zur Auswertung herangezogen wurden.

Der Gehalt an Titan und Chlor wurde röntgenspektrometrisch, der an Magnesium durch Atomabsorptionsspektroskopie ermittelt.

Beispiel 1

1. Herstellung der festen Katalysatorkomponente
1.1. 702 g wasserfreies Magnesiumchlorid (= 7,37 Mol) und 170,4 g Benzoesäureethylester (= 1,13 Mol) wurden in einer Vibrationsmühle 100 Stunden unter Stickstoff gemahlen. Das verwendete Stahlgefäß hatte einen Inhalt von 5 l und enthielt 15 kg Stahlkugeln aus rostfreiem Stahl mit einem Durchmesser von 15 mm.

1.2. In einem 10 l-Rührgefäß wurden unter Ausschluß von Luft und Feuchtigkeit 0,25 kg Titantetrachlorid in 2,2 l Toluol zuerst mit 0,17 kg Di-n-butylether und anschließend mit einer Lösung von 76 g Aluminiumtriethyl in 0,4 l Toluol jeweils innerhalb von 15 Minuten bei 25°C umgesetzt. Danach ließ man den Ansatz 5 Stunden bei derselben Temperatur nachreagieren.

1.3. In einem 60 l-Rührgefäß wurden 660 g des gemäß 1.1 hergestellten Mahlgutes in 30 l einer hydrierten, sauerstoffreien Benzinfraktion (Kp. 140 - 165°C) suspendiert und auf 80°C erhitzt. Innerhalb von 30 Minuten wurde die Lösung der gemäß 1.2 hergestellten Titanverbindung zudosiert, worauf man das Reaktionsgemisch weitere 2 Stunden bei 80°C hielt. Nach dem Abkühlen auf Raumtemperatur wurde der Feststoff unter Ausschluß von Luft auf einer Drucknutsche abgetrennt und dreimal mit je 15 l der Benzinfraktion gewaschen. Anschließend wurde er in 20 l der Benzinfraktion suspendiert. Der Titangehalt der Suspension wurde colorimetrisch bestimmt. Im Abstand von 3 Stunden wurden je 50 ml der Suspension entnommen, auf 40 l verdünnt und zur Polymerisation bereitgestellt. Die Konzentration, bezogen auf Titan, betrug dann 0,05 mMol/l.

2. Polymerisation:

Die Polymerisation wurde in zwei hintereinander geschalteten Rührkesseln mit Impeller-Rührern, einem Inhalt von je 40 l und einer Druckfestigkeit von 64 bar Nenndruck kontinuierlich durchgeführt.

In der Verbindungsleitung zwischen den beiden Kesseln befand sich ein Ventil, das periodisch 60 sec geschlossen gehalten und 4 sec geöffnet wurde. Der zweite Kessel war mit einer Niveauregelung ausgerüstet, die den Füllstand auf 90 % begrenzte. Bei einer Polymerisationstemperatur von 70°C wurden in den ersten Kessel die folgenden Mengen eingespeist:

37,0 l/h flüssiges, 30°C warmes Propylen, 6 Nl/h Wasserstoff, 12 l/h der Suspension des festen Katalysatorbestandteils in der Benzinfraktion, 1,2 l/h Aluminiumtriethyl, verdünnt in der Benzinfraktion auf 50 mMol/l, 0,38 l/h p-Toluylsäuremethylester, gelöst in der Benzinfraktion in einer Konzentration von ebenfalls 50 mMol/l. Die Polymerisation im zweiten Kessel wurde bei einer Temperatur von 60°C betrieben. Hier wurden 1,5 m³/h Ethylen von 30°C eindosiert.

Aufgrund dieser Bedingungen stellte sich im ersten Kessel ein Druck von 34,7 bar (Überdruck), im zweiten ein solcher von 34,5 bar (Überdruck) ein. Dem zweiten Kessel konnte eine Gasprobe entnommen werden, in der 23,4 Vol.-% Ethylen gefunden wurden. Dies entsprach einem Ethylenpartialdruck von 8,3 bar absolut, womit eine Ethylenkonzentration im flüssigen Propylen von ca. 12 Mol% erreicht wurde.

Aus dem Produktstrom aus dem zweiten Kessel wurde das feste Produkt von den flüssigen Bestandteilen abgetrennt und bei 2 bar und 50°C bei einer Verweilzeit von 2 h getrocknet. Es konnten hierdurch 5,5 kg/h Pulver gewonnen werden. Es besaß die in der Tabelle angegebenen Eigenschaftswerte.

Beim Verdampfen der überwiegend aus Propylen und Ethylen bestehenden Mutterlauge blieben stündlich 0,2 kg eines wachsartigen Polymeren zurück. Dies entspricht etwa 3,1 Gew.-%, bezogen auf gewonnenes Pulver.

Beispiel 2

Die Polymerisation wurde ähnlich wie im Beispiel 1 durchgeführt. In den ersten Kessel wurden 40 l/h flüssiges Propylen und die gleichen Mengen an Katalysatorbestandteilen wie im Beispiel 1 eingespeist. Die Kesseltemperatur wurde auf 65°C eingestellt. Die Polymerisation im zweiten Kessel wurde bei einer Temperatur von 50°C betrieben. Dort wurden 1,5 m³/h Ethylen eingespeist. Im ersten Kessel herrschte ein Druck von 28,9 bar (Überdruck), im zweiten von 28,6 bar (Überdruck). Eine dem zweiten Kessel entnommene Gasprobe enthielt etwa 23 Vol.-% Ethylen, woraus sich ein Ethylenpartialdruck von 6,8 bar absolut errechnen ließ. Damit ergab sich die Ethylenkonzentration im flüssigen Propylen unter Berücksichtigung der gegenüber Beispiel 1 veränderten Temperatur zu etwa 12 Mol-%. Es wurden 4,6 kg/h Pulver und rund 90 g/h lösliches Polymeres erhalten.

### Beispiel 3

Die Polymerisation gemäß Beispiel 1 wurde wiederholt, wobei 41 l/h flüssiges Propylen, die gleichen Mengen an Katalysatorbestandteilen wie im Beispiel 1 und 1,8 m³/h Ethylen eingeleitet wurden. Beide Reaktionskessel wurden auf 70°C gehalten. Es fielen 5,7 kg/h Pulver und 200 g/h lösliches Polymer an. Die dem zweiten Kessel entnommene Gasprobe enthielt 18 Vol.-% Ethylen. Bei einem Druck von 40,2 bar (Überdruck) im ersten Kessel und 40,0 bar (Überdruck) im zweiten Kessel ergab sich hieraus ein Ethylenpartialdruck von 7,5 bar absolut und eine Löslichkeit von Ethylen im flüssigen Propylen von 11 Mol %.

### Beispiel 4

Die Polymerisation gemäß Beispiel 1 wurde wiederholt, wobei in Abwandlung der Bedingungen des Beispiels 1 der zweite Reaktionskessel auf einen Füllstand von 30 % eingestellt wurde und 39,0 l/h flüssiges Propylen von 30°C, 6,5 Nl/h Wasserstoff, 15,6 l/h des festen Katalysatorbestandteils mit der Konzentration von 0,045 mMol/l Titan, 1,4 l/h Aluminiumtriethyl und 0,44 l/h p-Toluylsäuremethylester, in den gleichen Konzentrationen wie im Beispiel 1 genannt, in den ersten Kessel eingespeist wurden. In den zweiten Kessel wurden 3,2 m³/h Ethylen eingeleitet.

Im ersten Kessel baute sich ein Druck von 42,5 bar (Überdruck),im zweiten ein solcher von 42,2 bar (Überdruck) auf. Die Gasprobe aus dem zweiten Kessel enthielt 36 Vol.-% Ethylen, woraus sich ein Ethylenpartialdruck von 15,6 bar (absolut) berechnete. Hiernach betrug die Konzentration des Ethylens im Propylen etwa 24 Mol-%.

7,1 kg/h festes und rund 250 g/h lösliches Polymer wurden isoliert.

Beispiel 5

Die Polymerisation gemäß Beispiel 4 wurde wiederholt, wobei in Abwandlung der Bedingungen in der zweiten Stufe 8,6 $m^3$/h Ethylen eingespeist wurden. Dadurch wurden folgende Drucke gemessen: Erster Kessel: 58,5 bar (Überdruck); zweiter Kessel: 58,2 bar (Überdruck). Die Gasprobe aus dem zweiten Kessel enthielt ca. 52 Vol.-% Ethylen, woraus sich ein Partialdruck von ca. 31 bar errechnete. Es waren somit über 40 Mol % Ethylen gelöst.

Der Durchsatz, auf die Stunde bezogen, betrug 6,5 kg an Pulver und etwa 280 g an löslichem Polymerem.

Beispiel 6

1. Herstellung der festen Katalysatorkomponente:
530 g wasserfreies Magnesiumchlorid (5,57 Mol), enthaltend weniger als 1 Gew.-% Wasser und 280 g Benzoesäureethylester (1,86 Mol) wurden in einer Vibrationsmühle 100 Stunden unter Stickstoff gemahlen. Das verwendete Stahlgefäß hatte einen Inhalt von 5 l und enthielt 15 kg Stahlkugeln aus rostfreiem Stahl mit einem Durchmesser von 15 mm. 250 g des gemahlenen Produktes wurden unter Stickstoffatmosphäre in ein 5 l-Rührgefäß eingeführt und dort in 3,75 kg $TiCl_4$ suspendiert. Die Suspension wurde 2 Stunden bei 80°C gerührt und danach bei dieser Temperatur filtriert. Der Rückstand wurde fünfmal mit je 4 l der im Beispiel 1 beschriebenen Benzinfraktion bei 80°C gewaschen und in 4 l der Benzinfraktion suspendiert. Zur Polymerisation wurden in etwa 4-stündigen Abständen je 50 ml entnommen und auf 20 l verdünnt. Die Konzentration betrug dann 0,045 mMol/l, bezogen auf Titan.

2. Polymerisation:

Die Polymerisation wurde wie im Beispiel 4 durchgeführt. Es kamen zum Einsatz: 41 l/h flüssiges Propylen, 5,1 l/h der oben beschriebenen Suspension des festen Katalysatorbestandteiles, 1,8 l/h Aluminiumtriethyl, 0,54 l/h p-Toluylsäuremethylester, beides in einer Konzentration von 50 mMol/l Benzinfraktion sowie 3,5 m³/h Ethylen. In dem ersten Kessel stellte sich ein Druck von 43,1 bar (Überdruck), im zweiten von 42,9 bar (Überdruck) ein. Die Gasanalyse zeigte 37 Vol.-% Ethylen im zweiten Kessel, entsprechend einem Partialdruck von 16,3 bar absolut bzw. einer Konzentration von ca. 24 Mol %. 6,7 kg/h festes und etwa 230 g/h lösliches Produkt wurden gewonnen.

Beispiel 7

Die Polymerisation wurde ähnlich Beispiel 6 durchgeführt. Es wurden jedoch folgende Änderungen vorgenommen: Dosierung von 0,46 l/h Aluminiumtriethyl und 0,14 l/h p-Toluylsäuremethylester in den ersten Kessel. Zusammen mit 3,3 m³/h Ethylen wurden in den zweiten Kessel nochmals 0,23 l/h Aluminiumtriethyl eingespeist.

Die Kesseldrucke betrugen 41,1 resp. 40,8 bar (Überdruck), die Gasphase im zweiten Kessel enthielt 34 Vol.-% Ethylen, woraus sich ein Ethylenpartialdruck von 14,3 bar absolut und rund 21 Mol % Löslichkeit ergeben. Die stündliche Produktion betrug 6,7 kg an festem und annähernd 280 g an löslichem Polymer.

Beispiel 8

Die Polymerisation gemäß Beispiel 6 wurde wiederholt, wobei als einzige Änderung 14 Nl/h Wasserstoff in den ersten Kessel gegeben werden. Es fielen 6,5 kg/h festes und 310 g/h lösliches Polymer an.

Vergleichsbeispiel A

Die Polymerisation wurde unter den Bedingungen des Beispiels 6 durchgeführt. Entsprechend der deutschen Offenlegungsschrift 31 40 664 wurde jedoch im zweiten Reaktionskessel eine niedrige Ethylenkonzentration im flüssigen Propylen, gleichbedeutend mit einem niedrigen Ethylenpartialdruck, eingestellt. Dies geschah durch ein Ethyleneingas von 0,56 m³/h. Es stellten sich folgende Drucke ein: 29,1 bar (Überdruck) im ersten Kessel, 28,9 bar (Überdruck) im zweiten Kessel. Eine Probe des Gases aus dem zweiten Kessel hatte einen Ethylengehalt von 13 Vol.-%. Hieraus wurde ein Ethylenpartialdruck von annähernd 4 bar absolut errechnet, woraus sich eine Löslichkeit von etwa 4 Mol % ergab. Man erhielt 6,1 kg/h Pulver und 185 g/h lösliches Polymer.

Vergleichsbeispiel B und C

Die Vergleichsbeispiele B und C wurden unter den Bedingungen der Beispiele 1 und 2 der deutschen Offenlegungsschrift 31 40 664 durchgeführt. Dabei wurden Brocken eines stark klebrigen Produktes erhalten, die nur durch vollständiges Zerlegen des Polymerisationsautoklaven gewonnen werden konnten. Sie wiesen die in der Tabelle aufgeführten Eigenschaften auf, wobei insbesondere die im Vergleich zu den Beispielen 1 bis 8 extrem niedrige Härte sowie der fast vollständige Verlust der Schlagzähigkeit zwischen 0°C und -40°C auffällt.

Vergleichsbeispiel D

Zur Durchführung einer ansatzweisen Polymerisation mit der gleichen Katalysatormenge wie im Beispiel 6 wurde ein Kessel mit 40 l Inhalt, einem Impeller-Rührer und einer Innendruckfestigkeit von 64 bar nacheinander mit 30 l flüssigem Propylen, 46 ml einer 2-molaren Aluminiumtriethyllösung, 13,6 ml einer 2-molaren Lösung des p-Toluylsäuremethylesters, beides gelöst in der Benzinfraktion, sowie 12,2 ml der Suspension des festen Katalysatorbestandteils gemäß Beispiel 6 in einer Konzentration von 18,9 mMol/l, bezogen auf Titan, in der Benzinfraktion beschickt. Dann wurde der Kesselinhalt mit einer Geschwindigkeit von 3°C/min aufgeheizt. Bei etwa 45°C Innentemperatur sprang die Polymerisationsreaktion an. Obwohl nunmehr die größtmögliche Kühlwassermenge mit einer Temperatur von 17°C in den Kesselmantel eingepumpt wurde, stieg die Innentemperatur mit
einer Geschwindigkeit von etwa 15°C/min an und erreichte
nach etwa 3 Minuten eine Spitzentemperatur von über 90°C.
Erst im Verlauf einer weiteren halben Stunde, in der die
Aktivität des Katalysators nachließ, gelang es, eine
konstante Innentemperatur von 70°C einzustellen.

Vergleichsbeispiel E

Die Polymerisation wurde unter ähnlichen Bedingungen wie im
Beispiel 1 durchgeführt, wobei jedoch ein aus Magnesiumchlorid, Benzoylchlorid, Titantetrachlorid und Triphenylphosphit in Toluol gemäß Ausführungsbeispiel 1 der japanischen Anmeldung Sho 54-39 487 hergestelter Kontakt eingesetzt wurde. Es ergaben sich folgende Änderungen bei den
in den ersten Kessel eingespeisten Mengen: 39,0 l/h flüssiges Propylen von 30°C, 8 Nl/h Wasserstoff, 0,29 mMol/h des
oben genannten Katalysators (bezogen auf im Feststoff enthaltenes Titan), 1,4 l/h Aluminiumtriethyl in der genannten
Verdünnung und 0,56 l/h Benzoesäureethylester, ebenfalls
mit einer Konzentration von 50 mMol/l in der Benzinfraktion
gelöst. In den zweiten Kessel wurden bei 65°C Innentemperatur 0,70 m³/h Ethylen eindosiert.

Im ersten Kessel stellten sich 33,3 und im zweiten Kessel
33,1 bar (Überdruck) ein. In einer Gasprobe aus dem zweiten Kessel ließ sich ein Ethylengehalt von 14,6 Vol.-%
ermitteln, entsprechend einem Ethylenpartialdruck von 5,0
bar absolut und einer Konzentration des gelösten Ethylens
von 6 Mol %.

Es wurden 4,93 kg/h Pulver und etwa 0,23 kg/h wachsartiges
Polymer erhalten. Die Prüfung ergab die in der Tabelle
angegebenen Werte.

Tabelle

| | Schmelz-index 230/5 dg/min | Ethylen-gehalt Gew.-% | Härte N/mm² | Kerbschlagzähigkeit bei mJ/mm² | | | Gehalte an Katalysatorresten | | |
|---|---|---|---|---|---|---|---|---|---|
| | | | | 23°C | 0°C | -40°C | Ti ppm | Mg ppm | Cl ppm |
| Beispiel 1 | 4,1 | 8,6 | 49 | 43 | 34 | 8 | 5 | 19 | 66 |
| Beispiel 2 | 6,9 | 4,6 | 66 | 17 | 10 | 4 | 5 | 19 | 76 |
| Beispiel 3 | 3,0 | 12,5 | 46 | o.B. | 32 | 8 | 5 | 18 | 64 |
| Beispiel 4 | 4,1 | 12,9 | 58 | 32 | 11 | 5 | 4 | 17 | 60 |
| Beispiel 5 | 3,1 | 19,4 | 48 | 44 | 37 | 10 | 5 | 19 | 66 |
| Beispiel 6 | 4,1 | 13,4 | 55 | 38 | 20 | 9 | 3 | 26 | 81 |
| Beispiel 7 | 2,8 | 15,5 | 40 | 58 | 47 | 18 | 2 | 24 | 83 |
| Beispiel 8 | 52 | 12,4 | 67 | 15 | 9 | 4 | 2 | 27 | 82 |
| Vergleichsbeispiel A | 7,2 | 2,7 | 61 | 14 | 5 | 2 | 3 | 29 | 89 |
| Vergleichsbeispiel B | 1,3 | 9,5 | 10 | o.B. | o.B. | 2 | 3 | 30 | 93 |
| Vergleichsbeispiel C | 1,4 | 11,5 | 7 | o.B. | o.B. | 3 | 2 | 25 | 83 |
| Vergleichsbeispiel E | 7,0 | 3,5 | 62 | 15 | 7 | 2 | 3 | 50 | 155 |

o.B. = ohne Bruch des Prüfkörpers bei 60 mJ/mm²

- 25 -

Patentansprüche:

1. Verfahren zur Herstellung einer Polypropylen-Formmasse bestehend aus

   65 bis 95 Gew.-% eines Polypropylens und 35 bis 5 Gew.-% eines Ethylen-Propylen-Copolymers durch kontinuierliche Polymerisation in zwei Stufen im flüssigen Propylen,

   dadurch gekennzeichnet,

   daß man in der ersten Stufe bei einer Verweilzeit von 30 bis 180 Minuten ein kristallines Polypropylen oder durch geringe Mengen eines anderen 1-Olefins modifiziertes Polypropylen und in der zweiten Stufe bei einer Verweilzeit von 10 bis 90 Minuten in Gegenwart von 6 bis 60 Mol % Ethylen, bezogen auf das anwesende Ethylen-Propylen-Gemisch, ein Ethylen-Propylen-Copolymer herstellt, wobei man in beiden Stufen einen Mischkatalysator verwendet, welcher durch Inberührungbringen

   (A) des Reaktionsproduktes aus

   (a1) einem Umsetzungsprodukt eines Magnesiumhalogenids mit einem Elektronendonor und/oder einem Cyclopolyen und

   (a21) einer durch Reduktion von Titantetrachlorid mittels einer metallorganischen Verbindung der I. bis III. Hauptgruppe des Periodensystems entstehenden Verbindung oder

   (a22) Titantetrachlorid mit

   (B) einer halogenfreien aluminiumorganischen Verbindung und

   (C) einer Verbindung aus der Gruppe der Cyclopolyene und der aromatischen Carbonsäureester entstanden ist.

2. Verfahren nach Anspruch 1, dadurch gekennzeichnet, daß man einen Mischkatalysator verwendet, welcher durch Inberührungbringen

   (A) des Reaktionsproduktes aus

   (a1) einem Umsetzungsprodukt eines Magnesiumhalogenids

0135834

mit einem Elektronendonor und/oder einem Cyclopolyen und

(a21) einer durch Reduktion von Titantetrachlorid mittels
einer metallorganischen Verbindung der I. bis III.
Hauptgruppe des Periodensystems entstehenden Verbindung mit

(B) einer halogenfreien aluminiumorganischen Verbindung
und

(C) einer Verbindung aus der Gruppe der Cyclopolyene
und der aromatischen Carbonsäureester entstanden
ist.